# EUROPEAN PATENT APPLICATION

(11) **EP 4 159 522 A1**
(43) Date of publication of application: **05.04.2023**
(21) Application number: 21890847.3
(22) Date of filing: 30.09.2021
(51) Int. Cl.: B60L 7/10, B60L 7/18, B60L 15/20

(54) **TORQUE CONTROL METHOD AND APPARATUS FOR SLIPPERY ROAD SURFACE, AND TERMINAL DEVICE**

(30) Priority: 10.11.2020 CN 202011249262
(71) Applicant: Great Wall Motor Company Limited, Baoding, Hebei 071000 (CN)
(72) Inventor: ZANG, Xuechen, Baoding, Hebei 071000 (CN); WANG, Xiaojie, Baoding, Hebei 071000 (CN); DU, Leiming, Baoding, Hebei 071000 (CN)
(74) Representative: Klunker IP Patentanwälte PartG mbB
(86) International application number: PCT/CN2021/122179
(87) International publication number: WO 2022/100319

(57) **Abstract**

A method and an apparatus for torque control on a slippery road surface and a terminal device are provided. The method includes: presetting a torque-lower-limit-value, a first numerical value is a torque value recycled by the vehicle which is moving on the slippery road surface and performs an energy recovery normally during a coasting process, the second numerical value is a torque value that prevents a vehicle wheel from being locked on the slippery road surface, the second numerical value is greater than the first numerical value, and the torque-lower-limit-value is set to the first numerical value by default; setting, when an anti-lock braking system of the vehicle is activated, the torque-lower-limit-value as the second numerical value to reduce an absolute value of a reverse torque exerted on the vehicle wheel due to the energy recovery, and the vehicle wheel enters an anti-lock state; maintaining the anti-lock state of the vehicle wheel for a preset first time period; comparing the currently requested torque value with a preset third numerical value after the first time period is passed; and resetting the torque-lower-limit-value to the first numerical value to enable the vehicle wheel to exit the anti-lock state, if the currently requested torque value is greater than the third numerical value. By applying the method, it can be guaranteed that the vehicle moves on the slippery road surface smoothly, a driving experience is improved, and the safety of the vehicle is guaranteed accordingly.

## Description

### CROSS-REFERENCE TO RELATED APPLICATION

This patent application claims priority to Chinese patent application No. 202011249262.3 filed on November 10, 2020 and entitled "method and apparatus for torque control on slippery road surface, and terminal device", the entire contents of which are incorporated herein by reference.

### TECHNICAL FIELD

The present disclosure relates to the technical field of electric vehicles, and more particularly to a method for torque control on slippery road surface, an apparatus for torque control on slippery road surface, and a terminal device.

### BACKGROUND

The global energy crisis problem is becoming more and more serious. Since a traditional automobile has a large energy consumption, and a tail gas of the traditional vehicle contains a plurality of pollutants in the environment, the new energy vehicles are becoming the direction of of transition of the automobile industry. However, a torque control strategy of a new energy vehicle is crucial to the safety and the driving performance of the new energy vehicle and the driving experience of a driver.

At present, in order to improve an endurance mileage of a vehicle, kinetic energy is generally converted into electric energy to be stored in a storage battery by requesting a negative torque from a motor controller unit (Motor Controller Unit, MCU). When the vehicle enters a coasting state, energy recovery in a coasting process is performed. However, when the vehicle is moving on a slippery road surface, a vehicle wheel may be locked due to low road adhesion coefficient, and an anti-lock braking system (Anti-lock Braking System, ABS) is activated. As the vehicle wheel is locked again due to the energy recovery during the coasting process, the ABS is activated again. The safety of the vehicle is reduced due to the repeated activation and inactivation of the ABS state, and the driving experience of the driver is seriously affected.

### SUMMARY

### TECHNICAL PROBLEM

In view of this, embodiments of the present disclosure provide a method and apparatus for torque control on a slippery road surface, and a terminal device, which aim to solve the problem in the prior art that the safety of the vehicle is reduced and the driving experience is bad due to the simultaneous actions of the energy recovery in the coasting process of the vehicle and the ABS system.

### TECHNICAL SOLUTION FOR SOLVING THE TECHNICAL PROBLEM

### TECHNICAL SOLUTION

In order to achieve the objective, in the first aspect, a method for torque control on a slippery road surface is provided in the embodiments of the present disclosure, this method includes:
presetting a torque-lower-limit-value, the torque-lower-limit-value can be selected from at least two numerical values, the two numerical values are a first numerical value and a second numerical value, respectively; the first numerical value is a negative value, the first numerical value is a torque value recycled by the vehicle which is moving on the slippery road surface and performs an energy recovery normally during a coasting process, the second numerical value is a torque value that prevents a vehicle wheel from being locked on the slippery road surface, the second numerical value is greater than the first numerical value, and the torque-lower-limit-value is set to the first numerical value by default;
setting, when an anti-lock braking system of the vehicle is activated, the torque-lower-limit-value to the second numerical value to reduce an absolute value of a reverse torque exerted on the vehicle wheel due to the energy recovery, in order that the vehicle wheel enters an anti-lock state;
maintaining the anti-lock state of the vehicle wheel for a preset first time period;
comparing a currently requested torque value with a preset third numerical value after the first time period is passed;
resetting, if the currently requested torque value is greater than the third numerical value, the toque-lower-limit-value to the first numerical value to enable the vehicle wheel to exit the anti-lock state.

As another embodiment of the present disclosure, setting, when the anti-lock braking system of the vehicle is activated, the torque-lower-limit-value to the second numerical value is implemented by performing following steps of:
comparing the currently requested torque value and the second numerical value when the anti-lock braking system is activated;
modifying the torque-lower-limit-value from the first numerical value to the second numerical value through a gradient processing, if the currently requested torque value is less than the second numerical value.

As one another embodiment of the present disclosure, a value of a first driving torque for driving the vehicle wheel to rotate is equal to the second numerical value within the first time period, within the first time period.

As one another embodiment of the present disclosure, the method further includes: comparing the currently requested torque value with the second numerical value in real time within the first time period, and setting a second driving torque for driving the vehicle wheel to rotate according to a result of comparison.

As one another embodiment of the present disclosure, the method further includes: comparing, if the currently requested torque value is less than the second numerical value, the currently requested torque value with the torque-lower-limit-value and taking a maximum value of the currently requested torque value and the torque-lower-limit-value as the value of the second driving torque;
taking the currently requested torque value as the second driving torque, if the currently requested torque value is not less than the second numerical value.

As one another embodiment of the present disclosure, setting the torque-lower-limit-value to the second numerical value when the anti-lock braking system of the vehicle is activated is implemented by performing following steps:
comparing the current request torque value with the second numerical value when the anti-lock braking system is activated;
directly modifying the torque-lower-limit-value fromthe first numerical value to the second numerical value, if the currently requested torque value is not less than the second numerical value.

As one another embodiment of the present disclosure, a value of a third driving torque for driving the vehicle wheel to rotate within the first time period is not less than the second numerical value.

As one another embodiment of the present disclosure, the method further includes: comparing the currently requested torque value with the second numerical value in real time within the first time period, and setting a fourth driving torque for driving the vehicle wheel to rotate according to a result of comparison.

As another embodiment of the present disclosure, the method further includes: taking the second numerical value as the value of the fourth driving torque, if the currently requested torque value is less than the second numerical value;
taking the currently requested torque value as the value of the fourth driving torque, if the currently requested torque value is not less than the second numerical value.

As one another embodiment of the present disclosure, the method further includes: comparing, within the first time period after the anti-lock braking system of the vehicle is activated, the currently requested torque value at a second moment with the third numerical value if the anti-lock braking system is activated again at a first moment; where the second moment is a moment when the first time period is passed since a starting moment, the first moment is taken as the starting moment;
resetting, if the currently requested torque value at the second moment is greater than the third numerical value, the torque-lower-limit-value to the first numerical value to enable the vehicle wheel to exit the anti-lock state;
a fifth driving torque for driving the vehicle wheel to rotate is equal to the second numerical value, if the currently requested torque value at the second moment is not greater than the third numerical value.

As one another embodiment of the present disclosure, the method further includes: comparing the currently requested torque value with the preset third numerical value after the first time period is passed; a sixth driving torque used for driving the vehicle wheel to rotate is equal to the second numerical value if the currently requested torque value is not greater than the third numerical value.

As one another embodiment of the present disclosure, the torque-lower-limit-value is set in a torque path.

In a second aspect, an apparatus for torque control on a slippery road surface is provided in the embodiments of the present disclosure, the apparatus includes:
a processing module configured to preset a torque-lower-limit-value, the torque-lower-limit-value can be selected from at least two numerical values, the two numerical values are a first numerical value and a second numerical value, respectively. The first numerical value is a negative value, the first numerical value is a torque value recycled by the vehicle which is moving on the slippery road surface and performs an energy recovery normally during a coasting process, the second numerical value is a torque value that prevents a vehicle wheel from being locked on the slippery road surface, the second numerical value is greater than the first numerical value. The torque-lower-limit-value is set to the first numerical value by default. The torque-lower-limit-value is set to the second numerical value when an anti-lock braking system of the vehicle is activated;

The apparatus includes a detection module configured to detect whether the currently requested torque value is greater than a third numerical value after the torque-lower-limit-value is set to the second numerical value and the torque-lower-limit-value is maintained at the second numerical value within the first time period period.

The apparatus includes a relieving module configured to restore a normal capability of the energy recovery of the vehicle during the coasting process when the currently requested torque value is greater than the third numerical value.

Where the processing module is further configured to reset the toque-lower-limit-value to the first numerical value.

In the third aspect, a terminal device is provided in the embodiments of the present disclosure, the terminal device includes: a memory, a processor and a computer program stored in the memory and executable by the processor. The processor is configured to, when executing the computer program, implement steps of the method for torque control on the slippery road surface according to any one of the embodiments.

In the fourth aspect, a computer-readable storage medium is provided in the embodiments of the present disclosure, the computer-readable storage medium stores a computer program, when the computer program is executed by the processor, steps of the method for torque control of the electric vehicle on the slippery road surface according to any one of the embodiments are implemented.

### BENEFICIAL EFFECT OF THE INVENTION

### BENEFICIAL EFFECT

The beneficial effects of the present disclosure are as follows: compared with the prior art, when the activation of the ABS of the vehicle is detected, the preset torque-lower-limit-value is set to the second numerical value by using a corresponding method, so that the locking of vehicle wheel caused due to the too large absolute value of the reverse torque exerted on the vehicle wheel is effectively avoided. After the second numerical value is maintained by the vehicle for the first time period, the torque-lower-limit-value is reset to the first numerical value if the currently requested torque value is greater than the third numerical value, so that the limitation to the energy recovery of the vehicle during a vehicle coasting process is relieved, and the vehicle wheel exits the anti-lock state. By applying the aforesaid method, it is ensured that the vehicle can move on the slippery road surface smoothly, the driving experience is improved, and the safety of the vehicle is ensured simultaneously.

### BRIEF DESCRIPTION OF THE DRAWINGS

### DESCRIPTION OF THE DRAWINGS

In order to describe the embodiments of the present disclosure more clearly, a brief introduction regarding the accompanying drawings that need to be used for describing the embodiments of the present disclosure or the prior art is given below; it is apparent that the accompanying drawings described below are merely some embodiments of the present disclosure, a person of ordinary skill in the art may also acquire other drawings according to the current drawings without paying creative labor.
FIG. 1 illustrates a schematic flowchart of implementation of a method for torque control on a slippery road surface provided by one embodiment of the present disclosure;
FIG. 2 illustrates a schematic diagram of controlling a torque value at a vehicle wheel end provided by one embodiment of the present disclosure;
FIG. 3 illustrates a schematic diagram of controlling a torque value at a vehicle wheel end provided by another embodiment of the present disclosure;
FIG. 4 illustrates a schematic diagram of controlling a torque value at a vehicle wheel end provided by another embodiment of the present disclosure;
FIG. 5 illustrates a structural diagram of an apparatus for torque control on a slippery road surface provided by one embodiment of the present disclosure;
FIG. 6 illustrates a structural diagram of the apparatus for torque control on the slippery road surface provided by another embodiment of the present disclosure;
FIG. 7 illustrates a schematic diagram of a terminal device provided by one embodiment of the present disclosure.

### DETAILED DESCRIPTION OF EMBODIMENTS

In the following descriptions, in order to describe but not intended to limit the present application, concrete details including specific system structure and technique are proposed, so that a comprehensive understanding of the embodiments of the present application is facilitated. However, a person of ordinarily skill in the art should understand that, the present application can also be implemented in some other embodiments from which these concrete details are excluded. In other conditions, detailed explanations of method, circuit, device and system well known to the public are omitted, so that unnecessary details which are disadvantageous to the understanding of the description of the present application may be avoided.

For the illustration of the technical solutions of the present disclosure, the technical solutions of the present disclosure are described in detail according to embodiments below:

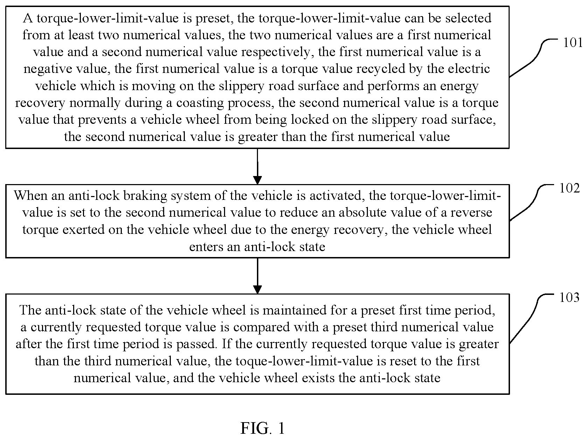

FIG. 1 illustrates a schematic flowchart of implementation of a method for torque control on a slippery road surface according to one embodiment of the present disclosure, as detailed below.

In a step of S101: a torque-lower-limit-value is preset in a vehicle control unit (Vehicle Control Unit, VCU) of a vehicle. This torque-lower-limit-value can be selectively set to at least two values, and the two values are a first numerical value and a second numerical value. The first numerical value is a torque value recycled by a vehicle which moves on the slippery road surface and performs energy recovery normally during a coasting process. The second numerical value is a torque value that prevents a vehicle wheel from being locked on the slippery road surface. When the vehicle performs the energy recovery during the coasting process, the value of the torque at the vehicle wheel end is a negative value, both the first numerical value and the second data are negative values, and the second numerical value is greater than the first numerical value. The torque-lower-limit-value is the minimum value of the torque output corresponding to an activation condition of the anti-lock braking system (Anti-lock Braking System, ABS) of the vehicle.

During a vehicle driving process, before activation of the ABS is not detected, the torque-lower-limit-value is set to the first numerical value by default. When the vehicle performs the energy recovery during the coasting process, the reverse torque exerted on the vehicle wheel is constrained by the first numerical value. The absolute value of the reverse torque is generally not greater than the absolute value of the first numerical value. It should be noted that, in the present disclosure, a torque value that drives the vehicle to move ahead is defined as a positive value, and a torque value that drives the vehicle to move backwards is defined as a negative value.

When the vehicle moves on the slippery road surface, an adhesion coefficient between the vehicle wheel and the road surface is reduced, if the reverse torque of the vehicle wheel is still limited at the first numerical value at this time, the vehicle wheel can be locked because that the absolute value of the reverse torque of the vehicle wheel is too large. the lock of the vehicle wheel can activate the ABS of the vehicle, the ABS enables rotation of the vehicle wheel to be restored. However, because the energy recovery in the coasting process is still performed at this time, and the torque-lower-limit-value is the first numerical value. After the rotation of the vehicle wheel is restored, the vehicle wheel is locked again because that the absolute value of the reverse torque of the vehicle wheel is too large, and the ABS is activated. Due to this reason, the condition of repeated activation and inactivation of the ABS may be caused, and the driving experience and the safety of the vehicle are seriously affected.

In a step of S102, when the ABS of the vehicle is activated, the torque-lower-limit-value is set to the second numerical value to reduce the absolute value of the reverse torque exerted on the vehicle wheel due to energy recovery, so that the vehicle wheel enters the anti-lock state.

Both the first numerical value and the second numerical value are negative values, and the second numerical value is greater than the first numerical value, so that the absolute value of the second numerical value is less than the absolute value of the first numerical value. After the torque-lower-limit-value in the VCU is set to the second numerical value, the absolute value of the reverse torque exerted on the vehicle wheel is reduced, so that the locking of the vehicle wheel is effectively avoided, the ABS is avoided from being mistakenly activated, an occurrence of condition of repeated activation and inactivation of the ABS is avoided, the driving experience is improved, and the safety of the vehicle is further ensured. It should be noted that the vehicle wheel enters the anti-lock state in the step S102 is independent of the ABS system; instead, the vehicle wheel enters the anti-lock state in the step S 102 is caused due to the change of the torque-lower-limit-value.

In the coasting process of the new energy electric vehicle, the negative torque used for the energy recovery in the coasting process is obtained by the VCU by looking up a table according to the current vehicle speed and the opening degree of the accelerator pedal. When the vehicle is coasting, if the brake pedal is not stepped, then, the torque used for energy recovery in the entire torque path is only the torque of energy recovery during the coasting process. In this condition, if the vehicle moves on the slippery road surface, in the present disclosure, a lower limit value is set to the vehicle wheel end torque within a certain time period, so that the absolute value of the vehicle wheel end torque is reduced, and the locking of the vehicle wheel is avoided. In this way, although the capability of energy recovery of the vehicle during the coasting process is limited within the time period, it can be ensured that the vehicle wheels cannot be locked, so that the vehicle can move on the slippery road surface smoothly. After the vehicle moves through the slippery road surface, the limitation is released, and the normal capability of energy recovery of the vehicle during the coasting process is recovered.

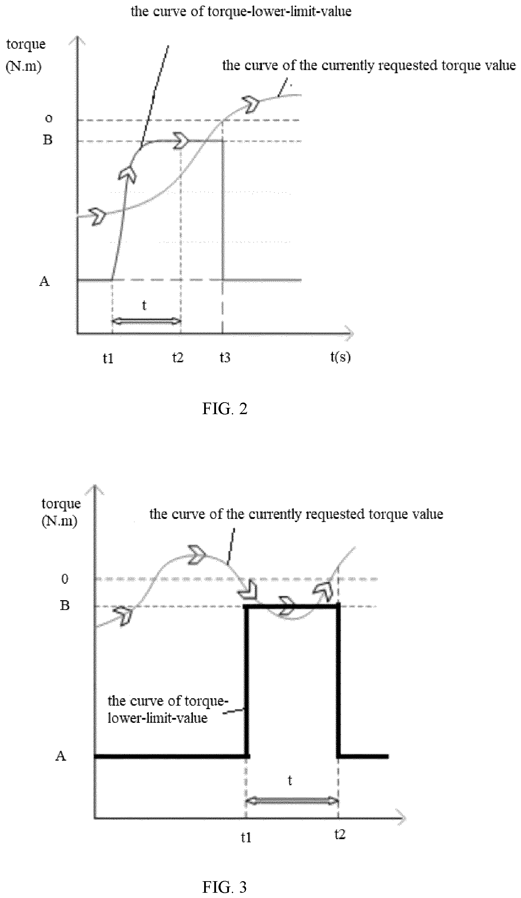

Optionally, as shown in FIG. 2, FIG. 3 and FIG. 4, the first numerical value may be AN·M, and the second numerical value may be BN·M. Both A and B are less than zero, and B is greater than A.

Optionally, at a step of S102, when the ABS of the vehicle is activated, the torque-lower-limit-value may be set to the second numerical value by performing the following steps:

comparing the currently requested torque value with the second numerical value when the ABS is activated;

modifying the torque-lower-limit-value from the first numerical to the second numerical value through a gradient processing, if the currently requested torque value is less than the second numerical value.

This method is described by taking FIG. 2 as an example. In FIG. 2, there are two curves, one curve is a changing curve of the torque-lower-limit-value, the other curve is the curve of the currently requested torque value. The arrows in FIG. 2 represent the torque value applied by the vehicle for driving the vehicle wheel to rotate. In FIG. 2, at the moment t1, the activation of the ABS is detected by the VCU, and the currently requested torque value is less than the second numerical value B, the torque-lower-limit-value is modified from the first numerical value A to the second numerical value B through a gradient processing.

Optionally, in the first time period, the value of the first driving torque for driving the vehicle wheel to rotate is equal to the second numerical value. That is, within the first time, the torque value used by the vehicle to drive the vehicle wheel to rotate may be the second numerical value. The starting point of the first time period is a time point when the activation of the ABS is detected.

Optionally, in the first time period, the currently requested torque value and the second numerical value may be compared in real time, and the second driving torque for driving the vehicle wheel to rotate is set according to the result of comparison.

A maximum value of the currently requested torque value and the torque-lower-limit-value is taken as the numerical value of the second driving torque if the currently requested torque value is smaller than the second numerical value. The currently requested torque value is taken as the second driving torque if the currently requested torque value is not smaller than the second numerical value.

This method is described by taking FIG. 2 as an example. In the first time period T, the currently requested torque value and the second numerical value B are compared in real time; it can be seen that the currently requested torque value is less than the second numerical value B at any moment in the first time period T. Then, the torque value for driving the vehicle wheel to rotate is a maximum value of the currently requested torque value and the torque-lower-limit-value.

Optionally, At a step of S102, when the anti-lock system of the vehicle is activated, the torque-lower-limit-value is set to the second numerical value by performing the following steps:
comparing the current request torque value with the second numerical value when the anti-lock system is activated;
directly modifying the torque-lower-limit-value equaling the first numerical value to the second numerical value, if the currently requested torque value is not less than the second numerical value.

This method is described by taking FIG. 3 as an example. In FIG. 3, there are two curves, one curve is the changing curve of the torque-lower-limit-value, and the other curve is the curve of the currently requested torque value. The arrows in FIG. 3 represent torque values used by the vehicle for driving the vehicle wheel to rotate. In FIG. 3, at the moment t1, the activation of ABS is detected by the VCU, and the currently requested torque value is not less than the second numerical value B, the torque-lower-limit-value equaling the first numerical value A is directly modified to the second numerical value B, rather than being modified to the second numerical value B through the gradient processing.

Optionally, within the first time period, a value of a third driving torque for driving the vehicle wheel to rotate is not less than the second numerical value. That is, within the first time period, the torque value used by the vehicle to drive the vehicle wheel to rotate may not be less than the second numerical value.

Optionally, within the first time period, the currently requested torque value and the second numerical value are compared in real time, and a fourth driving torque for driving the vehicle wheel to rotate is set according to the result of comparison.

The second numerical value is taken as the value of the fourth driving torque if the currently requested torque value is less than the second numerical value; and taking the currently requested torque value as the value of the fourth driving torque if the currently requested torque value is not less than the second numerical value.

This method is described by taking FIG. 3 as an example. In the first time period t, the currently requested torque value and the second numerical value B are compared in real time; it can be seen that the currently requested torque value is greater than the second numerical value B at the two time points of the first time period t. At this time, the currently requested torque value is the torque value used by the vehicle to drive the vehicle wheel to rotate. The currently requested torque value is less than the second numerical value B at the middle of the first time period, at this time, the second numerical value B is the torque value used by the vehicle to drive the vehicle wheel to rotate.

Optionally, in a step of S103, the torque-lower-limit-value is arranged in the torque path. The torque path is generally arranged in a vehicle controller.

At the step 103, the anti-lock state of the vehicle wheel lasts for a preset first time period, after the first time period, the currently requested torque value and the preset third numerical value are compared. the torque-lower-limit-value is reset to the first numerical value if the currently requested torque value is greater than the third numerical value, and the vehicle wheel exits the anti-lock state.

Optionally, the third numerical value may be 0 N·m, the third numerical value is generally greater than the first numerical value and the second numerical value.

This method is described by taking FIG. 3 as an example. In the FIG. 3, the activation of the ABS of the vehicle is detected at the moment t1, the moment t2 is reached after the first time period t, the currently requested torque value and the third numerical value 0 are compared at the moment t2. It can be found that the currently requested torque value at the moment t2 is greater than the third numerical value 0, the torque-lower-limit-value is reset to the first numerical value A, and the vehicle wheel exits the anti-lock state. At this time, the torque value used by the vehicle for driving the vehicle wheel to rotate is equal to the currently requested torque value.

Optionally, in the step of S103, after the first time, the currently requested torque value and the preset third numerical value are compared. If the currently requested torque value is not greater than the third numerical value, the sixth driving torque for driving the vehicle wheel to rotate is equal to the second numerical value.

This method is described by taking FIG. 2 as an example. In the FIG. 2, the second moment t2 is reached after the first time t, the currently requested torque value and the third numerical value 0 are compared; it can be found that the currently requested torque value at the moment t2 is less than the third numerical value 0, and the torque value used by the vehicle for driving the vehicle wheel to rotate is still the second numerical value. The detected currently requested torque value is not less than the third numerical value 0 when the moment t3 is reached, the torque-lower-limit-value is reset to the first numerical value A, and the vehicle wheel exits the anti-lock state.

Optionally, in the step of S 102, within the first time period after the activation of the ABS of the vehicle, if the anti-lock system is activated again at the first moment, the currently requested torque value and the third numerical value are compared at the second moment. Where the second moment is a moment after the first time period of a starting moment of the first moment, if the currently requested torque value at the second moment is greater than the third numerical value, the torque-lower-limit-value is reset to the first numerical value, and the vehicle wheel exits the anti-lock state. If the currently requested torque value is not greater than the third numerical value at the second moment, the fifth driving torque for driving the vehicle wheel to rotate is equal to the second numerical value.

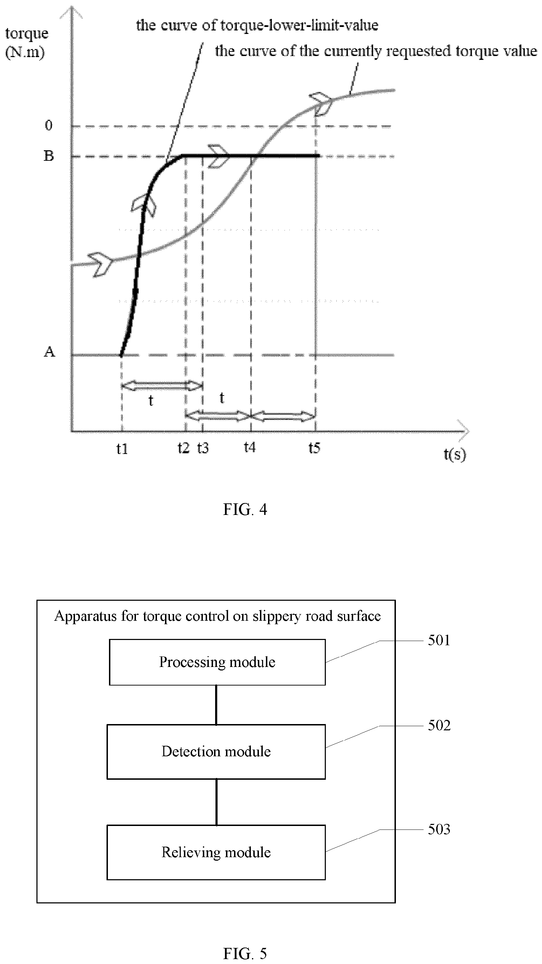

This method is described by taking FIG. 4 as an example. There are two curves in the FIG. 4, one curve is the changing curve of the torque-lower-limit-value, and the other curve is the curve of the currently requested torque value. The arrows in FIG. 4 represent the torque values used by the vehicle for driving the vehicle wheel to rotate. In the FIG. 4, the activation of the ABS of the vehicle is detected at the moment 11. If the ABS is not activated again, the currently requested torque value and the third numerical value 0 should be compared at the moment t3, and the next operation is performed according to the result of comparison. However, at the moment t2 within the first time period t, the ABS is activated again, a time interval of the first time period t should be recalculated by taking the moment t2 as the starting moment, and the currently requested torque value and the third numerical value 0 are compared at the second moment t4. If the currently requested torque value at the moment t4 is less than the third numerical value 0, the torque value used by the vehicle for driving the vehicle wheel to rotate is the second numerical value B. Until the moment t5 is reached, the currently requested torque value is greater than the third numerical value 0, the torque-lower-limit-value is reset to the first numerical value A, and the vehicle wheel exits the anti-lock state.

According to the method for the torque control on the slippery road surface provided by the present disclosure, when the activation of the ABS of the vehicle is detected, the preset torque-lower-limit-value is set to the second numerical value by using a corresponding method according to the result of comparison between the currently requested torque value and the second numerical value, so that the locking of vehicle wheel caused due to the too large absolute value of the reverse torque exerted on the vehicle wheel can be effectively avoided. After the second numerical value is maintained by the vehicle for the first time period, the torque-lower-limit-value is reset to the first numerical value if the currently requested torque value is greater than the third numerical value, so that the limitation to the energy recovery of the vehicle during a vehicle coasting process is relieved, and the vehicle wheel exits the anti-lock state. By applying the aforesaid method, it is ensured that the vehicle can move on the slippery road surface smoothly, the driving experience is improved, and the safety of the vehicle is ensured simultaneously.

It should be understood that, the values of serial numbers of the steps in the aforesaid embodiments do not indicate an order of execution sequences of the steps. Instead, the execution sequences of the steps should be determined by functionalities and internal logic of the steps, and thus shouldn't be regarded as limitation to implementation processes of the embodiments of the present disclosure.

Corresponding to the method for torque control on the slippery road surface, FIG. 5 illustrates an apparatus for torque control on a slippery road surface. As shown in FIG. 5, this apparatus may include: a processing module 501, a detection module 502 and a relieving module 503.

The processing module 501 is configured to preset a torque-lower-limit-value, the torque-lower-limit-value can be selected from at least two numerical values, the two numerical values are a first numerical value and a second numerical value respectively, the first numerical value is a negative value, the first numerical value is a torque value recycled by the vehicle which is moving on the slippery road surface and performs an energy recovery normally during a coasting process, the second numerical value is a torque value that prevents a vehicle wheel from being locked on the slippery road surface, the second numerical value is greater than the first numerical value, and the torque-lower-limit-value is set to the first numerical value by default. The torque-lower-limit-value is set to the second numerical value when an anti-lock braking system of the vehicle is activated.

The detection module 502 is configured to detect whether the currently requested torque value is greater than a third numerical value after the torque-lower-limit-value is set to the second numerical value and the torque-lower-limit-value is maintained at the second numerical value for the first time period period.

The relieving module 503 is configured to restore a normal capability of energy recovery of the vehicle during a coasting process when the currently requested torque value is greater than the third numerical value.

Where the processing module 501 is further configured to reset the toque-lower-limit-value to the first numerical value.

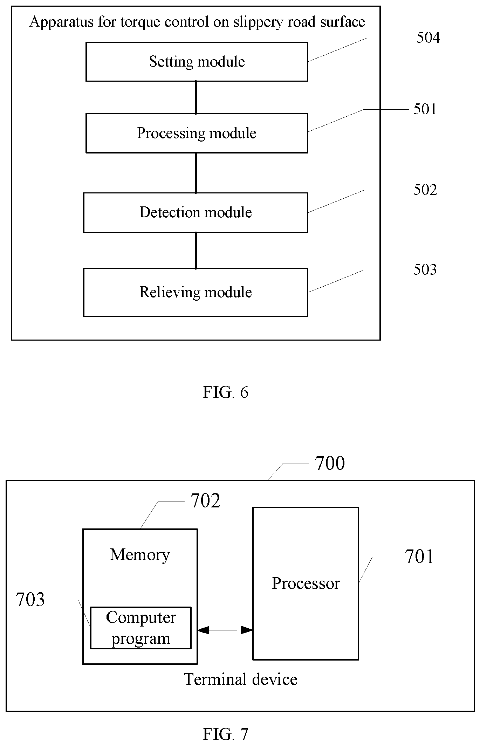

Optionally, as shown in FIG. 6, the apparatus for torque control on the slippery road surface may further include a setting module 504.

The setting module 504 is configured to set the torque-lower-limit-value in a vehicle controller.

Optionally, according to the various embodiments of the method for torque control on the slippery road surface, the processing module 501 is further configured to compare the currently requested torque value with the second numerical value.

The processing module 501 is configured to the increase the torque-lower-limit-value from the first numerical value to the second numerical value through a gradient processing, if the currently requested torque value is less than the second numerical value.

The processing module 501 can directly set the torque-lower-limit-value to the second numerical value and control the vehicle to move for the first time period using a torque value no less than the second numerical value, if the currently requested torque value is not less than the second numerical value.

The processing module 501 is further configured to determine whether the currently requested torque value is less than the second numerical value by comparison in the first time period. The processing module 501 can control the vehicle to move under the driving of the torque equaling the second numerical value if the currently requested torque value is less than the second numerical value, and can control the vehicle to move under the driving of the torque equaling the currently requested torque value if the currently requested torque value is not less than the second numerical value.

Optionally, after the torque-lower-limit-value is set to the second numerical value, the detection module 502 is further configured to:
detect whether the currently requested torque value is greater than the third numerical value at a second moment, if the ABS of the vehicle is reactivated within the first time period. Where the second moment is the moment after the first time period of the starting moment, and the first moment is taken as the starting moment. That is, the time interval between the first moment and the second moment is the first time period.

The detection module 502 is configured to modify the torque-lower-limit-value equaling the second numerical value as the first numerical value if the currently requested torque value detected at the second moment is greater than the third numerical value, and relieve the limitation to the capability of energy recovery of the vehicle during a coasting process.

The detection module 502 is further configured to control the vehicle to continuously move under the driving of the torque equaling the second numerical value, if the currently requested torque value detected at the second moment is not greater than the third numerical value.

Optionally, after determining whether the currently requested torque value is greater than the third numerical value by comparison, the processing module 501 is further configured to control the vehicle to continuously move under the driving of the torque equaling the second numerical value if the currently requested torque value is not greater than the third numerical value.

The apparatus for torque control on the slippery road surface provided by the present disclosure can implement the aforesaid method for torque control on the slippery road surface. When the activation of the ABS of the vehicle is detected, the processing module 501 sets the preset torque-lower-limit-value to the second numerical value by using a corresponding method according to the result of comparison between the currently requested torque value and the second numerical value, thereby effectively avoiding the locking of vehicle wheel caused due to the too large absolute value of the reverse torque exerted on the vehicle wheel. After the second numerical value is maintained by the vehicle for the first time period, the relieving module 503 resets the torque-lower-limit-value to the first numerical value if the detection module 502 detects that the currently requested torque value is greater than the third numerical value, so that the limitation to the energy recovery of the vehicle during a vehicle coasting process is relieved, and the vehicle wheel exits the anti-lock state. By applying the aforesaid apparatus, it is ensured that the vehicle can move on the slippery road surface smoothly, the driving experience is improved, and the safety of the vehicle is ensured simultaneously.

FIG. 7 illustrates a schematic diagram of a terminal device according to one embodiment of the present disclosure. As shown in FIG. 7, the terminal device 700 in this embodiment includes a processor 701, a memory 702, and a computer program 703 (e.g., a program for torque control on the slippery road surface) stored in the memory 702 and executable on the processor 701. When the computer program 703 is executed by the the processor 701, the steps (e.g., the steps S101-S103 shown in FIG. 1) in the embodiments of the method for torque control on the slippery road surface are implemented. When the computer program 703 is executed by the processor 701, the functions of the various modules (e.g., the functions of the module 501, module 502, the module 503 shown in FIG. 5, or the functions of the module 501, module 502, the module 503 and the module 504 shown in FIG. 6) in the apparatus embodiment are implemented.

As an example, the computer program 703 may be divided into one or a plurality of program modules, the one or plurality of program modules are stored in the memory 702, and are executed by the processor 701 so as to implement the present disclosure. The one or plurality of program modules may be a series of computer program instruction segments that can accomplish particular functionalities, these instruction segments are used for describing an executive process of the computer program 703 in the apparatus for torque control on the slippery road surface or in the terminal device 700. For example, the computer program 703 can be divided into the processing module 501, the detection module 502 and the relieving module 503. The functions of these various modules are shown in FIG. 5, and are not repeatedly described herein.

The terminal device 700 can be a computing device such as a desktop computer, a laptop computer, a palm computer, a cloud server, etc. The terminal device 700 can include but is not limited to: a processor 701, the memory 702. A person of ordinary skill in the art can understand that, FIG. 7 is only one example of the terminal device 700, but should not be constituted as limitation to the terminal device 700, more or less components than the components shown in FIG. 7 may be included. As an alternative, some components or different components may be combined; for example, the terminal device 700 can also include an input and output device, a network access device, a bus, etc.

The so-called processor 701 may be central processing unit (Central Processing Unit, CPU), and can also be other general purpose processor, digital signal processor (Digital Signal Processor, DSP), application specific integrated circuit (Application Specific Integrated Circuit, ASIC), field-programmable gate array (Field-Programmable Gate Array, FGPA), or some other programmable logic devices, discrete gate or transistor logic device, discrete hardware component, etc. The general purpose processor may be a microprocessor, as an alternative, the processor can also be any conventional processor, or the like.

The memory 702 may be an internal storage unit of the terminal device 700, such as a hard disk or a memory of the terminal device 700. The memory 702 may also be an external storage device of the terminal device 700, such as a plug-in hard disk, a smart media card (Smart Media Card, SMC), a secure digital (Secure Digital, SD) card, a flash card (Flash Card, FC) equipped on the terminal device 700. Furthermore, the memory 702 may not only include the internal storage unit of the terminal device 700, but also include the external memory of the terminal device 700. The memory 702 is configured to store the computer program and other procedures and data needed by the terminal device 700. The memory 702 may also be configured to store data that has been output or being ready to be output temporarily.

The person of ordinary skill in the art may understand clearly that, for the convenience of description and for conciseness, the dividing of the aforesaid various functional units and functional modules is merely described according to examples, in an actual application, the aforesaid functions may be assigned to different functional units and functional modules to be accomplished, that is, an inner structure of the device is divided into different functional units or modules, so that the whole or a part of functionalities described above can be accomplished. The various functional units and modules in the embodiments may be integrated into a processing unit, or each of the units exists independently and physically, or two or more than two of the units are integrated into a single unit. The aforesaid integrated unit may either by actualized in the form of hardware or in the form of software functional units. In addition, specific names of the various functional units and modules are only used to distinguish from each other conveniently, rather than being intended to limit the protection scope of the present application. Regarding the specific working process of the units and modules in the aforesaid system, reference may be made to a corresponding process in the aforementioned method embodiments, so that the specific working process of the units and modules in the system is not repeatedly described herein.

In the aforesaid embodiments, the descriptions of the various embodiments are emphasized respectively, regarding a part of one embodiment which has not been described or disclosed in detail, reference can be made to relevant descriptions in other embodiments.

The person of ordinary skill in the art may understand that, the elements and algorithm steps of each of the examples described in connection with the embodiments disclosed herein may be implemented in electronic hardware, or in combination with computer software and electronic hardware. Whether these functions are implemented by hardware or software depends on the specific application and design constraints of the technical solution. The skilled people could use different methods to implement the described functions for each particular application. However, such implementations should not be considered as going beyond the scope of the present application.

It should be understood that, in the embodiments of the present application, the disclosed device/terminal device and method could be implemented in other ways. For example, the device described above are merely illustrative; for example, the division of the units is only a logical function division, and other division could be used in the actual implementation, for example, multiple units or components could be combined or integrated into another system, or some features may be ignored, or not performed. In another aspect, the coupling or direct coupling or communicating connection shown or discussed could be an indirect coupling or a communicating connection through some interfaces, devices or units, and the coupling or direct coupling or communicating connection could be electrical, mechanical, or in other form.

The units described as separate components can be or can not be physically separate, the components shown as units can be or can not be physical units, the components may be located in one place, or be distributed onto multiple network elements. Apart or a whole of the elements can be selected to achieve the objective of the technical solution of this embodiment according to the actual requirement.

In addition, the various functional units in each of the embodiments of the present application may be integrated into a single processing unit, or exist individually and physically, or two or more than two units are integrated into a single unit. The aforesaid integrated unit can either be achieved by hardware, or be achieved in the form of software functional units.

When the integrated unit is achieved in the form of software functional units, and is sold or used as an independent product, the integrated unit may be stored in a computer readable storage medium. Based on this understanding, a whole or part of flow process for implementing the method in the embodiments of the present application can also be accomplished in the manner of using computer program to instruct relevant hardware. When the computer program is executed by the processor, the steps in the various method embodiments described above may be implemented. Wherein, the computer program comprises computer program codes, which may be in the form of source code, object code, executable documents or some intermediate form, etc. The computer readable medium may include: any physical equipment or device that can carry the computer program codes, recording medium, USB flash disk, mobile hard disk, hard disk, optical disk, computer memory, read-only memory (Read-Only Memory, ROM), random access memory (Random Access Memory, RAM), electrical carrier signal, telecommunication signal and software distribution medium, etc. It needs to be explained that, the contents contained in the computer readable medium may be added or reduced appropriately according to the requirement of legislation and patent practice in a judicial district, for example, in some judicial districts, according to legislation and patent practice, the computer readable medium doesn't include electrical carrier signal and telecommunication signal.

The embodiments described above are only intended to explain but not to limit the technical solutions of the present application. Although the present application has been explained in detail with reference to these embodiments, a person of ordinary skilled in the art can understand that, the technical solutions disclosed in the embodiments can also be amended, some technical features in the technical solutions can also be equivalently replaced. The amendments or the equivalent replacements don't cause the essence of the corresponding technical solutions to be deviated from the spirit and the scope of the technical solutions in the embodiments of the present disclosure, and thus should all be included in the protection scope of the present disclosure.

## Claims

1. A method for torque control on a slippery road surface, comprising:
presetting a torque-lower-limit-value, the torque-lower-limit-value can be selected from at least two numerical values, the two numerical values are a first numerical value and a second numerical value respectively, the first numerical value is a negative value, the first numerical value is a torque value recycled by the vehicle which is moving on the slippery road surface and performs an energy recovery normally during a coasting process, the second numerical value is a torque value that prevents a vehicle wheel from being locked on the slippery road surface, the second numerical value is greater than the first numerical value, and the torque-lower-limit-value is set to the first numerical value by default;
setting, when an anti-lock braking system of the vehicle is activated, the torque-lower-limit-value to the second numerical value to reduce an absolute value of a reverse torque exerted on the vehicle wheel due to the energy recovery, in order that the vehicle wheel enters an anti-lock state;
maintaining the anti-lock state of the vehicle wheel for a preset first time period;
comparing a currently requested torque value with a preset third numerical value after the first time period is passed;
resetting, if the currently requested torque value is greater than the third numerical value, the toque-lower-limit-value to the first numerical value, enabling the vehicle wheel to exit the anti-lock state.

2. The method for the torque control on the slippery road surface according to claim 1, wherein setting, when the anti-lock braking system of the vehicle is activated, the torque-lower-limit-value to the second numerical value is implemented by performing following steps of:
comparing the currently requested torque value and the second numerical value when the anti-lock braking system is activated;
modifying the torque-lower-limit-value from the first numerical value to the second numerical value through a gradient processing, if the currently requested torque value is less than the second numerical value.

3. The method for the torque control on the slippery road surface according to claim 2, wherein a value of a first driving torque for driving the vehicle wheel to rotate is equal to the second numerical value within the first time period.

4. The method for the torque control on the slippery road surface according to claim 2, further comprising: comparing the currently requested torque value with the second numerical value in real time within the first time period, and setting a second driving torque for driving the vehicle wheel to rotate according to a result of comparison.

5. The method for the torque control on the slippery road surface according to claim 4, further comprising: comparing, if the currently requested torque value is less than the second numerical value, the currently requested torque value with the torque-lower-limit-value, and taking a maximum value of the currently requested torque value and the torque-lower-limit-value as the value of the second driving torque;
taking the currently requested torque value as the second driving torque, if the currently requested torque value is not less than the second numerical value.

6. The method for the torque control on the slippery road surface according to claim 1, wherein setting the torque-lower-limit-value to the second numerical value when the anti-lock braking system of the vehicle is activated is implemented by performing following steps of:
comparing the current request torque value with the second numerical value when the anti-lock braking system is activated;
directly modifying the torque-lower-limit-value fromthe first numerical value to the second numerical value, if the currently requested torque value is not less than the second numerical value.

7. The method for the torque control on the slippery road surface according to claim 6, wherein a value of a third driving torque for driving the vehicle wheel to rotate within the first time period is not less than the second numerical value.

8. The method for the torque control on the slippery road surface according to claim 6, further comprising: comparing the currently requested torque value with the second numerical value in real time within the first time period, and setting a fourth driving torque for driving the vehicle wheel to rotate according to a result of comparison.

9. The method for the torque control on the slippery road surface according to claim 8, further comprising: taking the second numerical value as the value of the fourth driving torque if the currently requested torque value is less than the second numerical value;
taking the currently requested torque value as the value of the fourth driving torque if the currently requested torque value is not less than the second numerical value.

10. The method for the torque control on the slippery road surface according to claim 1, further comprising: comparing, within the first time period after the anti-lock braking system of the vehicle is activated, the currently requested torque value at a second moment with the third numerical value if the anti-lock braking system is activated again at a first moment; wherein the second moment is a moment when the first time period is passed since a starting moment, the first moment is taken as the starting moment;
resetting, if the currently requested torque value at the second moment is greater than the third numerical value, the torque-lower-limit-value to the first numerical value to enable the vehicle wheel to exit the anti-lock state;
a fifth driving torque for driving the vehicle wheel to rotate is equal to the second numerical value, if the currently requested torque value at the second moment is not greater than the third numerical value.

11. The method for the torque control on the slippery road surface according to any one of claims 1-10, further comprising: comparing the currently requested torque value with the preset third numerical value after the first time period is passed; a sixth driving torque used for driving the vehicle wheel to rotate is equal to the second numerical value if the currently requested torque value is not greater than the third numerical value.

12. The method for the torque control on the slippery road surface according to claim 1, wherein the torque-lower-limit-value is set in a torque path.

13. An apparatus for torque control on a slippery road surface, comprising:
a processing module configured to preset a torque-lower-limit-value, the torque-lower-limit-value can be selected from at least two numerical values, the two numerical values are a first numerical value and a second numerical value, respectively; the first numerical value is a negative value, the first numerical value is a torque value recycled by the vehicle which is moving on the slippery road surface and performs an energy recovery normally during a coasting process, the second numerical value is a torque value that prevents a vehicle wheel from being locked on the slippery road surface, the second numerical value is greater than the first numerical value, and the torque-lower-limit-value is set to the first numerical value by default; the torque-lower-limit-value is set to the second numerical value when an anti-lock braking system of the vehicle is activated;
a detection module configured to detect whether the currently requested torque value is greater than a third numerical value after the torque-lower-limit-value is set to the second numerical value and the torque-lower-limit-value is maintained at the second numerical value within the first time period period;
a relieving module configured to restore a normal capability of the energy recovery of the vehicle during the coasting process when the currently requested torque value is greater than the third numerical value;
wherein the processing module is further configured to reset the toque-lower-limit-value to the first numerical value.

14. A terminal device, comprising a memory, a processor and a computer program stored in the memory and executable by the processor, wherein the processor is configured to, when executing the computer program, implement steps of the method for torque control on the slippery road surface according to any one of claims 1-12.

15. A computer-readable storage medium, which stores a computer program, when the computer program is executed by the processor, steps of the method according to any one of claims 1-12 are implemented.
